# EUROPEAN PATENT APPLICATION

(11) **EP 4 306 813 A1**
(43) Date of publication of application: **17.01.2024**
(21) Application number: 22780047.1
(22) Date of filing: 14.03.2022
(51) Int. Cl.: F16C 19/06, F16C 33/66

(54) **BEARING DEVICE**

(30) Priority: 02.04.2021 JP 2021063725
(71) Applicant: Aichi Steel Corporation, Tokai-shi, Aichi 476-8666 (JP); Shigehara Manufacturing Co., Ltd., Osaka-shi, Osaka, 538-0044 (JP)
(72) Inventor: WATANABE, Hayato, Tokai-shi, Aichi 476-8666 (JP); ISHIDA, Kazuya, Tokai-shi, Aichi 476-8666 (JP); HIRANO, Hiroaki, Tokai-shi, Aichi 476-8666 (JP); SHIGEHARA, Hidetaka, Osaka-shi, Osaka 578-0973 (JP); SHIGEHARA, Hidekazu, Osaka-shi, Osaka 578-0973 (JP)
(74) Representative: Barker Brettell LLP
(86) International application number: PCT/JP2022/011381
(87) International publication number: WO 2022/209826

(57) **Abstract**

A bearing device includes an oil supply body that cooperates with a bearing ring to form an oil retention space to be filled with a lubricating oil. The oil retention space is open at least on a rolling element side. Thus, the lubricating oil is supplied from the oil retention space to a rolling bearing.

## Description

### CROSS-REFERENCE TO RELATED APPLICATION

This international application claims the benefit of Japanese Patent Application No. 2021-063725, filed on April 2, 2021 in the Japan Patent Office, and the entire disclosure of Japanese Patent Application No. 2021-063725 is incorporated herein by reference.

### TECHNICAL FIELD

The present disclosure relates to a bearing device comprising a rolling bearing.

### BACKGROUND ART

For example, a bearing device disclosed in Patent Document 1 supplies an oil for lubrication to a rolling bearing.

### PRIOR ART DOCUMENTS

### PATENT DOCUMENTS

Patent Document 1: Japanese Unexamined Patent Application Publication No. 2007-231987

### SUMMARY OF THE INVENTION

### PROBLEMS TO BE SOLVED BY THE INVENTION

The present disclosure discloses an example of a specific configuration for supplying an oil for lubrication to a rolling bearing.

### MEANS FOR SOLVING THE PROBLEMS

A bearing device according to one aspect of the present disclosure comprises a rolling bearing having an annular bearing ring and a plurality of rolling elements, and an oil supply body disposed on a side surface of the bearing ring for supplying an oil for lubrication to the plurality of rolling elements and a raceway surface of the bearing ring. The oil supply body cooperates with the bearing ring to form an oil retention space filled with the oil. The oil retention space is open at least on a rolling element side.

With the above configuration, the oil is supplied from the oil retention space to the rolling bearing in the present bearing device. Accordingly, for example, as compared to oil jet lubrication described in Patent Document 1, the oil can be stably supplied to the entire rolling bearing. As a result, with the present bearing device, a rotating shaft such as a motor shaft and a gear shaft that rotates at high speed can be stably supported.

### BRIEF DESCRIPTION OF THE DRAWINGS

FIG. 1 is a view showing a bearing device according to a first embodiment.
FIG. 2 is a view showing a structure of the bearing device according to the first embodiment.
FIG. 3 is a partly enlarged view showing the structure of the bearing device according to the first embodiment.
FIG. 4 is a view showing an oil supply body according to the first embodiment.

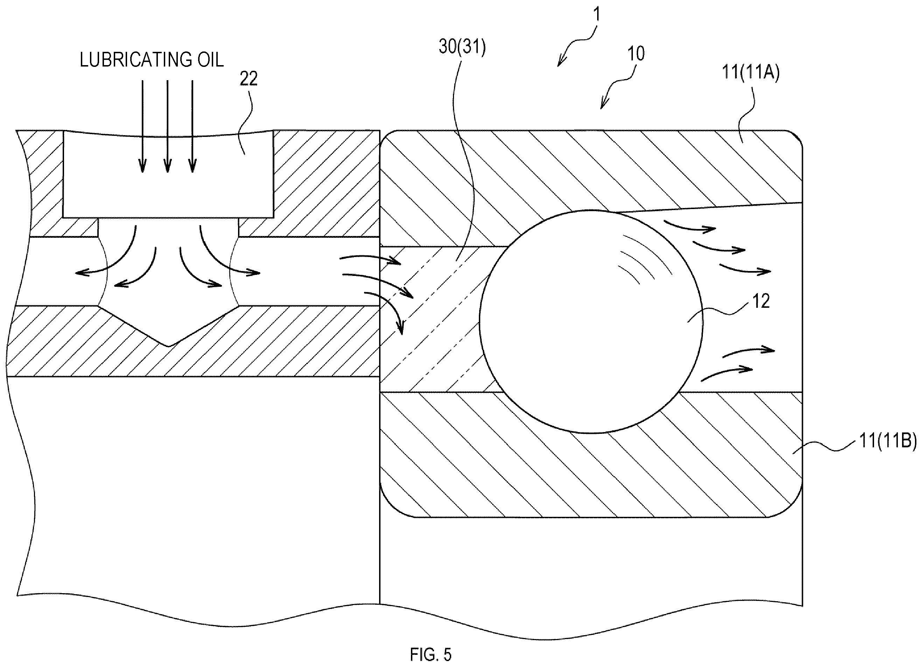

FIG. 5 is a view showing a bearing device according to a second embodiment.

### EXPLANATION OF REFERENCE NUMERALS

1...bearing device, 10...bearing, 11...bearing ring, 11A...outer ring, 11B ... inner ring, 12...rolling element, 20...oil supply body, 21...recess, 30...oil retention space, 31...first oil retention space, 32...second oil retention space

### MODE FOR CARRYING OUT THE INVENTION

Embodiments described below are example embodiments that belong to the technical scope of the present disclosure. In other words, matters specifying the invention recited in the claims are not limited to specific configurations, structures, or the like shown in the embodiments below.

Arrows indicating directions, hatched lines, and so on shown in the drawings are provided for the purpose of easier understanding of mutual relationships between the drawings, shapes of members or portions, and so on. Thus, the invention in the present disclosure is not limited by the directions shown in the drawings. The drawings with hatched lines are not necessarily sectional views.

A member or portion described at least with a reference numeral is at least one in number. In other words, the member or portion may be two or more in number unless it is accompanied by restrictive words such as "only one". The bearing device of the present disclosure comprises at least elements including members and portions described with respective reference numerals assigned thereto, and structural portions shown in the drawings.

### (First Embodiment)

### <1. Outline of Bearing Device>

The present embodiment is an example in which a bearing device according to the present disclosure is applied to an electric motor for use in transportation equipment such as electric vehicles. The electric vehicles according to the present disclosure include vehicles that can run on an electric motor alone, vehicles that can run on both an electric motor and an internal combustion engine, and the like.

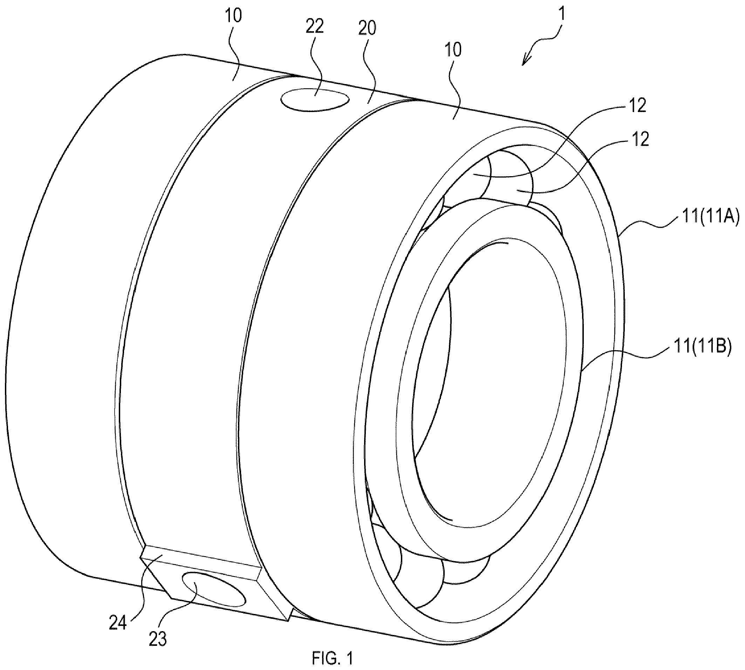

As shown in FIG. 1, a bearing device 1 comprises at least one rolling bearing 10 (in the present embodiment, two rolling bearings 10) and at least one oil supply body 20. The two rolling bearings 10 are identical rolling bearings.

Each of the rolling bearings 10 at least comprises an annular bearing ring 11, a plurality of rolling elements 12, a retainer (not shown), and so on. The bearing ring 11 is a member that forms a raceway surface with which the plurality of rolling elements 12 come into rolling contact.

Each of the rolling elements 12 is a rotating body that comes into rolling contact with the raceway surface. The rolling elements 12 according to the present disclosure are in the form of steel balls and disposed on an imaginary circle centered on a central axis of the bearing ring 11.

The bearing ring 11 according to the present embodiment comprises an outer ring 11A and an inner ring 11B. The outer ring 11A is disposed on a radially outer side with respect to the rolling elements 12. The inner ring 11B is disposed on a radially inner side with respect to the rolling elements 12. Hereinafter, the outer ring 11A and the inner ring 11B are collectively referred to as the bearing ring 11.

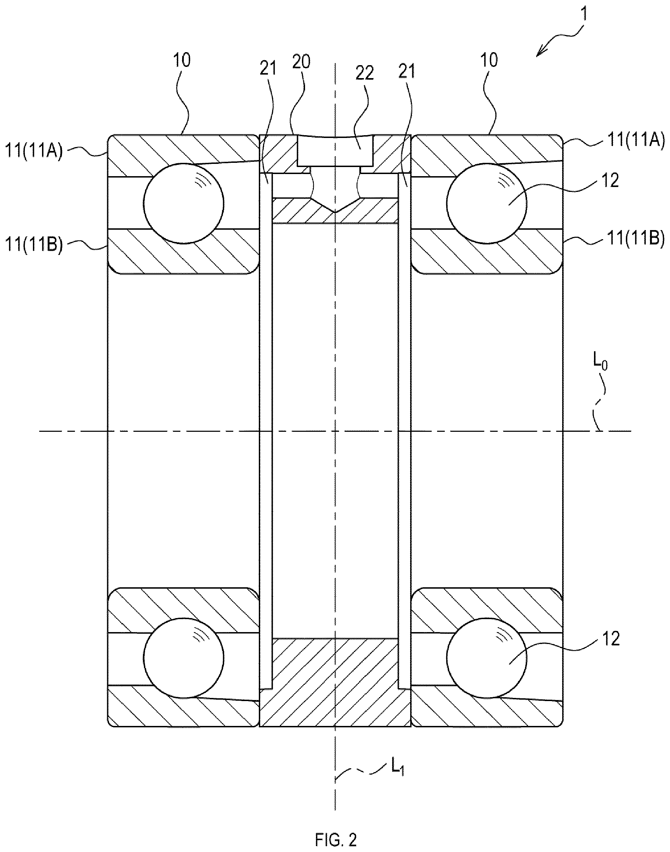

The retainer is disposed on both side surfaces of the bearing ring 11. In other words, two retainers are provided for the bearing ring 11. Each of the retainers retains positions of the respective rolling elements 12 and restricts contact of the adjacent rolling elements 12. The side surface of the bearing ring 11 is a surface facing an imaginary surface orthogonal to a center axis Lo (see FIG. 2) of the bearing ring 11.

The oil supply body 20 is a member disposed on the side surface of the bearing ring 11 for supplying an oil for lubrication (hereinafter, referred to as "lubricating oil") to the respective rolling elements 12 and the raceway surface. As shown in FIG. 2, the oil supply body 20 according to the present embodiment is disposed between the two rolling bearings 10, and also functions as a spacer that determines positions of the rolling bearings 10 in a direction of the center axis Lo.

### <2. Detailed Structure of Oil Supply Body>

As shown in FIG. 2, the oil supply body 20 according to the present embodiment has a structure substantially symmetrical with respect to a center line L1. Specifically, the oil supply body 20 has a shape in which a shape on a side facing the rolling bearing 10 on the left side of the drawing sheet and a shape on a side facing the rolling bearing 10 on the right side of the drawing sheet are symmetrical with respect to the center line L1.

The following description mainly relates to the shape of the oil supply body 20 that faces the rolling bearing 10 on the right side of the drawing sheet.

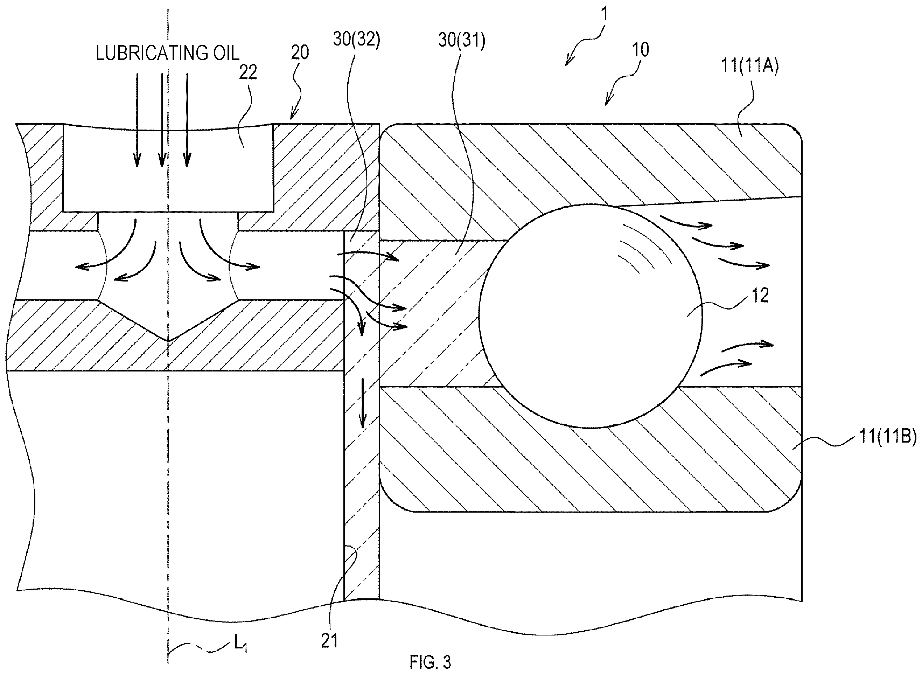

As shown in FIG. 3, the oil supply body 20 cooperates with the bearing ring 11 and the rolling elements 12 to form an oil retention space 30 (a hatched portion with two-dot chain lines). The oil retention space 30 is filled with the lubricating oil, and is open at least on a bearing ring 11 side, that is, on a rolling element 12 side.

In other words, a space where the bearing ring 11 and the rolling elements 12 are disposed and the oil retention space 30 are directly or indirectly communicated. Therefore, the lubricating oil filled in the oil retention space 30 is supplied to the space where the bearing ring 11 and the rolling elements 12 are disposed.

The oil retention space 30 according to the present embodiment comprises a first oil retention space 31, a second oil retention space 32 and so on. The first oil retention space 31 is an annular space between the outer ring 11A and the inner ring 11B, and faces the rolling elements 12 and the oil supply body 20.

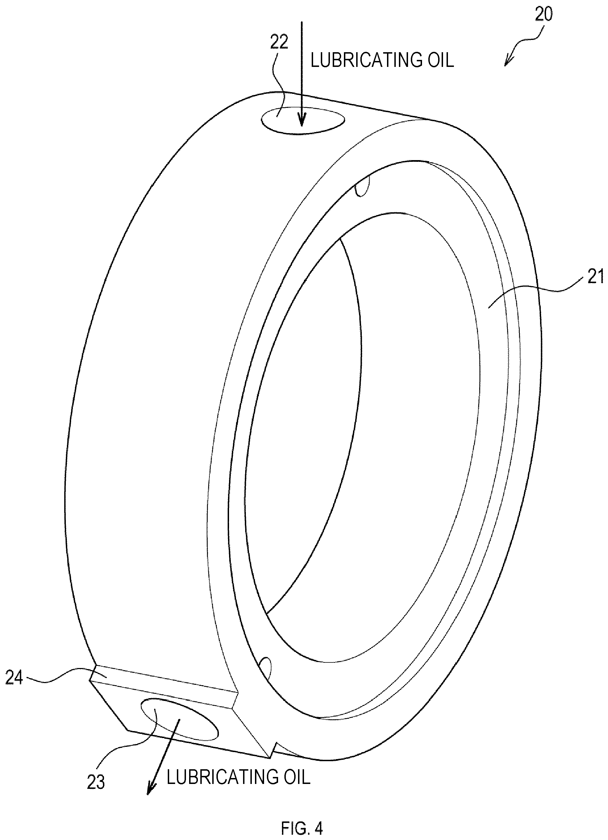

The second oil retention space 32 is formed by a recess 21 (see FIG. 4) provided in the oil supply body 20. The recess 21 is provided on the bearing ring 11 side of the oil supply body 20, and is an annular recess recessed in a direction opposite to the bearing ring 11 (see FIG. 3).

Therefore, as shown in FIG. 3, the oil retention space 30 according to the present embodiment, that is, the first oil retention space 31 and the second oil retention space 32, is an annular space that is open over its entire circumference on the rolling element 12 side.

The retainer (not shown) is disposed in the first oil retention space 31. In other words, the oil retention space 30 according to the present embodiment is indirectly connected to the rolling elements 12 and a raceway surface side via a gap between the retainer and the bearing ring 11 in a direction of the center line L1 (see FIG. 3).

As shown in FIG. 4, at least one oil inlet 22 and at least one oil outlet 23 are provided on an outer circumference side of the oil supply body 20. The oil inlet 22 is a supply port for supplying the lubricating oil to the recess 21, that is, to the oil retention space 30.

The oil outlet 23 is a discharge port for discharging the lubricating oil in the oil retention space 30. The oil inlet 22 or the oil outlet 23 (in the present embodiment, the oil outlet 23) is provided with a posture holder 24 for holding a posture of the oil supply body 20.

The posture holder 24 is a protrusion-like portion that radially protrudes from an outer circumferential surface of the oil supply body 20. The posture holder 24 is fitted into a recess of a motor housing (not shown), and thereby the posture of the oil supply body 20 is maintained.

In the present embodiment, the lubricating oil discharged from the oil supply body 20 is filtered with a filter (not shown), and thereafter cooled in an oil cooler (not shown). The cooled lubricating oil is again supplied to the oil supply body 20.

In the present embodiment, the lubricating oil supplied from the oil inlet 22 is supplied into the oil retention space 30 by a circumvoluting action caused by rotation of the inner ring 11B. Thus, in the present embodiment, the lubricating oil is supplied at a relatively low pressure, and an amount of the oil in accordance with a rotation speed can be automatically supplied.

### <3. Characteristics of Bearing Device according to Present Embodiment>

The bearing device 1 according to the present embodiment comprises the oil supply body 20 that cooperates with the bearing ring 11 to form the oil retention space 30 filled with the lubricating oil, and the oil retention space 30 is open at least on the rolling element 12 side.

With the configuration as above, the lubricating oil is supplied from the oil retention space 30 to the rolling bearings 10 in the bearing device 1. Accordingly, for example, as compared to oil jet lubrication disclosed in Patent Document 1, the lubricating oil can be stably supplied to the entire rolling bearings 10. Further, the bearing device 1 can stably support a rotating shaft such as a rotor shaft and a gear shaft of the electric motor that rotates at high speed.

The oil retention space 30 according to the present embodiment is an annular space that is open over its entire circumference on the rolling element 12 side. Thus, the lubricating oil can be stably supplied to the entire rolling bearings 10 in the present embodiment.

In the bearing device 1 according to the present embodiment, the annular recess 21 recessed in the direction opposite to the bearing ring 11 is provided on the bearing ring 11 side of the oil supply body 20, and the recess 21 forms at least a part of the oil retention space 30. As a result, as compared to a configuration in which the recess 21 is omitted, the amount of the lubricating oil filled in the oil retention space 30 increases, and thus the lubricating oil can be stably supplied to the entire rolling bearings 10.

Further, due to the increase in the amount of the lubricating oil filled in the oil retention space 30, heat capacity of the lubricating oil filled in the oil retention space 30 increases. As compared to the configuration in which the recess 21 is omitted, an effect of reducing a seizure of the bearings 10 caused by high-speed rotation is high. Accordingly, the bearing device 1 can support rotation in a wide rotation speed range.

### (Second Embodiment)

The oil retention space 30 according to the above-described embodiment comprises the first oil retention space 31 and the second oil retention space 32. In contrast, in the bearing device 1 according to a second embodiment, the second oil retention space 32 is eliminated. The oil retention space 30 comprises only the first oil retention space 31.

Thus, the oil supply body 20 according to the present embodiment does not have the recess 21. The same components as those of the above-described embodiment are denoted with the same reference numerals as those of the above-described embodiment. Therefore, in the present embodiment, duplicate description is omitted.

### (Other Embodiments)

In the rolling bearing 10 according to the above-described embodiments, the outer ring 11A and the inner ring 11B form the bearing ring 11. The present disclosure is not limited to this. Specifically, in the present disclosure, for example, either the outer ring 11A or the inner ring 11B may be eliminated, and the eliminated ring may be formed using the motor housing and so on.

The rolling bearing 10 according to the above-described embodiments is an angular ball bearing. The present disclosure is not limited to this. Specifically, the rolling bearing according to the present disclosure may be, for example, a radial ball bearing, a radial roller bearing or a tapered roller bearing.

The oil retention space 30 according to the above-described embodiment is an annular space, and is open over its entire circumference on the rolling element 12 side. The present disclosure is not limited to this. Specifically, in the present disclosure, for example, the oil retention space 30 may be an annular space having an arc-shaped opening, through which the oil retention space 30 is partially open toward the rolling element 12 side.

The oil supply body 20 according to the above-described embodiments also serves as a spacer. The present disclosure is not limited to this. Specifically, in the present disclosure, for example, a part of the motor housing may also serve as the oil supply body 20.

In the above-described embodiments, two rolling bearings 10 are present. The present disclosure is not limited to this. Specifically, in the present disclosure, for example, only one of the two rolling bearings 10 may be present.

In the above-described embodiments, the bearing ring 11 is provided with two retainers. The present disclosure is not limited to this. Specifically, in the present disclosure, for example, one retainer may be provided. Even in a case where one retainer is provided for the bearing ring 11, the same effect as in the above-described embodiments can be obtained.

The oil supply body 20 according to the above-described embodiments has a substantially symmetrical structure with respect to the center line L1. The present disclosure is not limited to this. Specifically in the present disclosure, for example, the oil supply body 20 may have an asymmetrical structure with respect to the center line L1.

The rolling elements 12 according to the above-described embodiments are steel balls. The present disclosure is not limited to this. Specifically, in the present disclosure, for example, the rolling elements 12 may be made from the same material as that of the bearing ring 11, or the rolling elements 12 may be made from a different material from the bearing ring 11.

Further, the present disclosure may only need to be consistent with the purpose of the disclosure described in the above-described embodiments, and is not limited to the above-described embodiments. Accordingly, at least two of the above-described embodiments may be combined, or any of the components illustrated in the drawings or denoted with reference numerals may be eliminated in the above-described embodiments.

## Claims

1. A bearing device comprising:
a rolling bearing having an annular bearing ring and a plurality of rolling elements; and
an oil supply body disposed on a side surface of the bearing ring for supplying an oil for lubrication to the plurality of rolling elements and a raceway surface of the bearing ring, the oil supply body cooperating with the bearing ring to form an oil retention space filled with the oil, wherein
the oil retention space is open at least on a rolling element side.

2. The bearing device according to claim 1, wherein the oil retention space is an annular space and is open over its entire circumference on the rolling element side.

3. The bearing device according to claim 1 or 2, wherein
the oil supply body is provided with an annular recess on a bearing ring side, the recess being recessed in a direction opposite to the bearing ring, and
the recess forms at least a part of the oil retention space.

4. The bearing device according to any one of claims 1 to 3, wherein
the oil supply body is a spacer that determines a position of the rolling bearing in a direction of a center axis of the rolling bearing.
